Europäisches Patentamt

European Patent Office

Office européen des brevets

(11) Veröffentlichungsnummer: **0 082 375**

**A2**

(12) **EUROPÄISCHE PATENTANMELDUNG**

(21) Anmeldenummer: **82111204.2**

(22) Anmeldetag: **03.12.82**

(51) Int. Cl.³: **H 02 K 7/08**
**H 02 K 7/116**

(30) Priorität: **21.12.81 DE 3150572**

(43) Veröffentlichungstag der Anmeldung:
**29.06.83 Patentblatt 83/26**

(84) Benannte Vertragsstaaten:
**AT BE CH DE FR GB IT LI NL SE**

(71) Anmelder: **SIEMENS AKTIENGESELLSCHAFT**
**Berlin und München Wittelsbacherplatz 2**
**D-8000 München 2(DE)**

(72) Erfinder: **Ihle, Olai**
**Thoma-Rieder-Strasse 10**
**D-8702 Margetshöchheim(DE)**

(72) Erfinder: **Adam, Peter**
**Allerseeweg 25**
**D-8706 Höchberg(DE)**

(54) Getriebemotor, insbesondere elektromotorischer Fensterheber-Antrieb.

(57) Bei einem Kfz-Fensterheber-Antrieb mit einem Elektromotor und daran angeblocktem Getriebe soll auf einfache
Weise sowohl eine Begrenzung des Axialspiels der durchgehenden Motor-Getriebe-Welle (9) als auch der Durchbiegung
des freien Wellenendes (93) der Motor-Getriebe-Welle (9) mit
der darauf befestigten Getriebe-Schnecke (12) im Lastbetrieb
erreicht werden; dazu wird vorgeschlagen, daß eine das
Axialspiel begrenzende, vor der Stirnseite des freien Wellenendes (93) in das Getriebegehäuse (4) einschraubbare
Stellschraube (2) zusätzlich an ihrem inneren Ende mit
einem, das freie Wellenende (Absatz 931) übergreifenden
Ansatz (21) versehen ist, durch den die Durchbiegung des
freien Wellenendes (93) begrenzbar ist. An die Stellschraube
(2) ist gleichzeitig ein Anlaufpilz mitangeformt.
Eine Anwendung eignet sich insbesondere für elektromotorische Fensterheber-Antriebe in Türen von Kraftfahrzeugen.

FIG 1

**0082375**

SIEMENS AKTIENGESELLSCHAFT      Unser Zeichen
Berlin und München             VPA 81 P 3 2 1 3 E

Getriebemotor, insbesondere elektromotorischer Fenster-
heber-Antrieb

Die Erfindung bezieht sich auf einen Getriebemotor, insbesondere elektromotorischen Fensterheber-Antrieb, der im Oberbegriff des Anspruchs 1 angegebenen Art; ein derartiger Getriebemotor ist aus der DE-OS 28 38 678 bekannt.

Bei dem bekannten, zum Antrieb eines Fensterhebers in einem Kraftfahrzeug vorgesehenen Getriebemotor ist die bis in das Getriebegehäuse verlängerte Motorwelle unmittelbar beiderseits des Motorläufers in Kalottenlagern gelagert; das über das eine Kalottenlager hinaus verlängerte freie Wellenende nimmt die Getriebe-Schnecke auf. Zwischen der Getriebe-Schnecke und dem benachbarten Kalottenlager ist ein gesondertes Axialdrucklager vorgesehen, das aufgrund der begrenzbaren Toleranzen auch eine weitgehende Begrenzung des Axialspiels des Motorläufers ermöglicht; auf der anderen Seite der Getriebe-Schnecke ist ein weiteres gesondertes Stützlager in taschenförmigen Vertiefungen des Getriebegehäuses derart angeordnet, daß die Durchbiegung des freien Wellenendes im betriebsmäßigen Eingriff unter Last zwischen Getriebe-Schnecke und Getriebe-Schneckenrad durch Anlegen gegen das Stützlager begrenzbar ist.

Aufgabe der vorliegenden Erfindung ist eine weitere fertigungs- und montagetechnische Vereinfachung des Getriebemotors mit vereinfachter Möglichkeit zur Begrenzung der Durchbiegung des freien Wellenendes unter Last und des Axialspiels der Motor-Getriebewelle.

Bk 2 Bih / 17.12.1981

Diese Aufgabe wird bei einem Getriebemotor der eingangs genannten Art erfindungsgemäß durch die kennzeichnende Lehre des Patentanspruchs 1 gelöst. Vorteilhafte Ausgestaltungen der Erfindung sind jeweils Gegenstand der Unteransprüche.

Die erfindungsgemäß ausgebildete Stellschraube vereinigt in einem einfachen herzustellenden und mit geringem Aufwand montier- sowie justierbaren Bauteil sowohl die Funktion einer einstellbaren Axialspiel- als auch die einer Durchbiegungs-Begrenzung des freien Wellenendes unter Last. Durch Verstellen der Stellschraube läßt sich sowohl die Axialspiel-Begrenzung auch größéren Tolerenzwerten anpassen, als auch gleichzeitig ein möglichst großer Stützlager-Anlagebereich unabhängig von der im Einzelfall gegebenen Toleranz gewährleisten. In vorteilhafter Weise ist an die Stellschraube gleichzeitig eine Anlauffläche für die Stirnfläche des freien Wellenendes, vorzugsweise einstückig, mitangeformt. Auf diese Art und Weise vereinfacht sich die Fertigung der Motor-Getriebe-Welle wesentlich, da auf Anbringung eines Anlauf-Kegels an das freie Wellenende verzichtet werden kann, was in jedem Fall das gesonderte und aufwendige Eindrehen eines Zentrierloches in die Stirnfläche erfordern würde.

Die Verwendung einer in ein Getriebegehäuse vor der Stirnfläche einer Motor-Getriebe-Welle einschraubbaren Stellschraube zur Begrenzung des Axialspiels ist bei einem elektrischen Scheibenwischermotor an sich bekannt (DE-AS 11 18 341); jedoch ist im bekannten Fall keine Maßnahme zur Begrenzung der Durchbiegung des freien Wellenendes unter Last vorgesehen. Außerdem wird ein wellenseitiger Anlaufkegel vorgesehen, der als gesondertes Bauteil in ein mittiges Zentrierloch in der Stirnfläche des freien Wellenendes einzusetzen ist.

**0082375**

Ausgehend von der vorteilhaften erfindungsgemäßen, auch bei größeren axialen Toleranzmaßen gewährleisteten Axial- und Durchbiegungs-Begrenzung ist nach einer Ausgestaltung der vorliegenden Erfindung vorgesehen, daß bei einem Getriebemotor mit einem gegen eine, insbesondere flanschartige Anlagefläche an das Getriebegehäuse mit seiner einen Stirnseite befestigbaren gesonderten Motorgehäuse das Motorgehäuse in der Nähe seiner einen Stirnseite mit zumindest zwei am Umfang verteilt eingestanzten schlitzförmigen Öffnungen versehen ist, in die jeweils eine Blechlasche mit ihrem einen Ende einsteckbar und mit ihrem anderen, im wesentlichen radial aus den schlitzförmigen Öffnungen herausragenden Ende im Sinne einer axialen Festspannung des Motorgehäuses gegen die Anlagefläche des Getriebegehäuses in dieses einschraubbar sind. Obwohl sich durch das Festspannen des Motorgehäuses gegen die Anlagefläche des Getriebegehäuses größere Toleranzen im Abstand zwischen Getriebegehäuse und Motorgehäuse und dadurch bedingt größeren Toleranzen im Axialspiel der mit ihrem einen Ende im Motorgehäuse und mit ihrem anderen Ende im Getriebegehäuse gelagerten durchgehenden Motor-Getriebe-Welle ergeben, kann durch die erfindungsgemäße Stellschraube trotzdem eine Axialspiel- u. Durchbiegungs-Begrenzung im gewünschten Maß mit einfachen Mitteln erreicht werden.

Die Erfindung sowie weitere vorteilhafte Ausgestaltungen werden im folgenden anhand eines schematisch dargestellten Ausführungsbeispiels in der Zeichnung näher erläutert. Darin zeigen:

Fig. 1 einen Längsschnitt einer aus Elektromotor und angeblocktem Getriebe bestehenden Antriebseinheit eines Getriebemotors für einen elektromotorischen Kfz-Fensterheber,

Fig. 2 in einem Detailausschnitt die Befestigung zwischen Motorgehäuse und Getriebegehäuse des Fensterhebers gemäß Fig. 1 vor dem Festziehen der Befestigungsschrauben,

Fig. 3 eine axiale Draufsicht auf das Motorgehäuse des Elektromotors gemäß Fig. 1,

Fig. 4 eine stirnseitige Draufsicht auf das Gehäuse des Elektromotors gemäß Fig. 3,

Fig. 5 bis 7 verschiedene Ausführungsformen der an die Stellschraube jeweils angeformten Anlaufflächen.

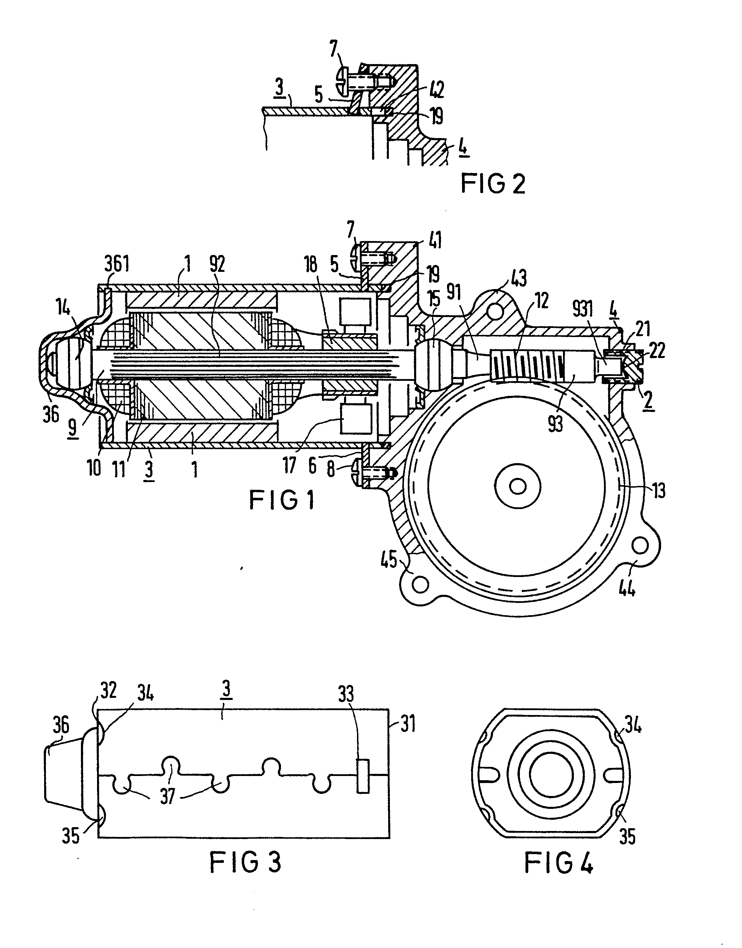

Die im Ausführungsbeispiel schematisch dargestellte Kfz-Fensterheber-Antriebseinheit besteht gemäß Fig. 1 aus einem in der linken Hälfte der Fig. 1 dargestellten elektromotorischen Antrieb mit einem Motorgehäuse 3 und einem mit diesem verbundenen, in der rechten Hälfte der Figur dargestellten Getriebe mit einem gesonderten Getriebegehäuse 4. An der Innenumfangsfläche des Motorgehäuses 3 des als Gleichstrom-Permanentmagnetmotor ausgebildeten Elektromotors sind teilschalenförmige Dauermagnete 1, 1 befestigt. Der Rotor ist auf einer Motor-Getriebe-Welle 9 über Kalottenlager 14, 15 im Motorgehäuse 3 bzw. im Getriebegehäuse 4 gelagert. Die in das Rotorblechpaket 11 eingebrachte Rotorwicklung 10 ist an einen vor dem rechten Wickelkopf angeordneten Kommutator 18 angeschlossen, der über ein hier nur angedeutetes Bürstensystem 17 mit einer nicht dargestellten Stromquelle verbunden ist.

Das linke Kalottenlager 14 für die Motor-Getriebe-Welle 9 ist in einem Lagerschild 36 gelagert, der mit seinen äußeren Umfang an der Innenumfangsfläche des Motorgehäuses 3 anliegt und mit am Umfang verteilt angeordneten radialen Nasen 361 in entsprechende axiale, stirnseitig offene Ausnehmungen des Motorgehäuses 3 hineinragt und durch entsprechende Verformungen 34, 35 des Motorgehäuses 3 über die Nasen 361 in ihrer Lage im Motorgehäuse 3 fixiert sind. Das rechte Kalottenlager 15 ist im linken, elektromotorseitigen Teil des als Gußteil hergestellten Getriebegehäuse 4 gelagert. Die Motor-Getriebe-Welle 9 ist über die rechte Seite dieses Kalottenlagers 15 hinaus verlängert und nimmt auf ihrem freien Wellenende 93 eine Getriebe-Schnecke 12 auf, die mit einem Schneckenrad 13 in Eingriff steht, das in hier nicht näher dargestellter Weise den Seilzug des Fensterheber-Antriebs antreibt.

Axial vor der rechten Stirnseite des freien Wellenendes 93 ist in eine Öffnung des Getriebegehäuses 4 eine Stellschraube 2 einschraubbar und in ihrer jeweiligen Einschraubtiefe, z.B. durch Selbsthemmung fixierbar angeordnet; die Stellschraube 2 dient sowohl der Begrenzung des Axialspiels der Motor-Getriebe-Welle 9 als auch der Begrenzung der Durchbiegung des freien Wellenendes 93, wenn dieses bei Last durch den Eingriff der Getriebe-Schnecke 12 in das Schneckenrad 13 aufgrund der Schrägverzahnung eine Kraftkomponente auffangen muß, die die Getriebe-Schnecke 12 aus der Verzahnung des Schneckenrades 13 nach oben herausdrücken will. Die Stellschraube 2 weist dazu an ihrem der Stirnfläche des freien Wellenendes 93 zugewandten Ende einerseits eine speziell geformte Anlauffläche für die Stirnfläche der Motor-Getriebe-Welle 9 und andererseits einen hohlzylinderförmigen, zum freien Wellenende 93 hin offenen und dieses übergreifenden Ansatz 21 auf; im unbelasteten, d.h. nicht durchgebogenen Zustand des freien Wellenendes 93 bleibt der Ansatz 21 im wesentlichen belastungsfrei und berührungsfrei zum freien Wellenende 93; jedoch kann sich das freie Wellenende 93 im belasteten und dann leicht durchgebogenen Zustand über den Ansatz 21 der Stellschraube 2 gegen das Getriebegehäuse 4 abstützen. Zur Axialspiel-Begrenzung kann die Motor-Getriebe-Welle 9 mit ihrem rechten Ende gegen den Anlaufkegel der Stellschraube 2 und mit ihrem linken Ende mit einem an die Motor-Getriebe-Welle angeformten Anlaufkegel gegen eine axiale Ausbauchung des Lagerschildes 36 anlaufen.

Nach einer Ausgestaltung der Erfindung ist das freie Wellenende 93 im Bereich des übergreifenden Ansatzes 21 der Stellschraube 2 mit einem Absatz 931 mit einem gegenüber dem Außendurchmesser der Getriebe-Schnecke 12 bzw. dem übrigen Wellenende verringerten Außendurchmesser versehen.

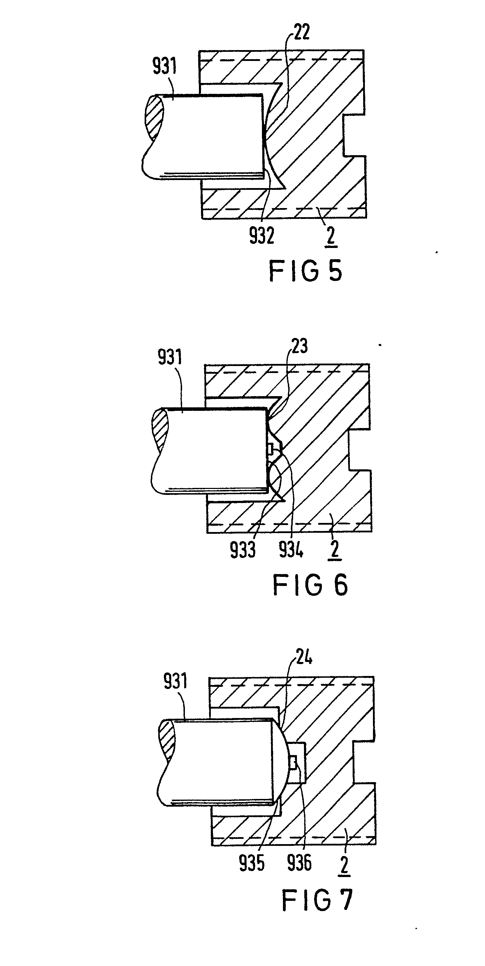

In vorteilhafter Weise ist gemäß Fig. 5 nun die Anlauffläche der Stellschraube 2 für die gegenüberliegende Stirnfläche 932 des freien Wellenendes 93 mit einer Wölbung 22 im Sinne einer mittigen Berührung zur Stirnfläche 932 versehen.    . Eine derartige Anlauffläche kann in einfacher Weise direkt an die Stellschraube 2 angeformt, z.B. vorzugsweise einstückig mitangespritzt werden; dies erübrigt die Anbringung eines gesonderten Anlaufkegels an das freie Wellenende. Die Welle kann vielmehr durch einfaches Abdrehen von einem Rundstahlstab ohne Notwendigkeit einer Zentrierung abgestochen werden. Um den dabei u.U. mittig verbliebenen, in Fig. 6 bzw. Fig. 7 angedeuteten Drehbutzen 934 bzw. 936 ohne gesonderte Nachbearbeitung stehen lassen zu können, ist nach einer weiteren Ausgestaltung der Erfindung gemäß Fig. 6 bzw. Fig. 7 vorgesehen, daß die Anlauffläche der Stellschraube 2 für die gegenüberliegende Stirnfläche 933 bzw. 935 des freien Wellenendes 93 mit einem konzentrischen Anlaufring mit einer Wölbung 23 bzw. 24 im Sinne einer außermittigen Berührung zur Stirnfläche 933 bzw. 935 versehen; der

mittig verbleibende Drehbutzen wird dabei in vorteilhafter Weise von dem Anlaufring berührungsfrei übergriffen. Die Anlauffläche der Stellschraube 2 kann gemäß Fig. 5 bzw. Fig. 6 konvexförmig oder gemäß Fig. 7 konkavförmig ausgebildet sein, im ersten Fall wird die Gegenstirnfläche des freien Wellenendes in besonders einfacher Weise planflächig, im letzten Fall jedoch gemäß Fig. 7 konvexförmig, jeweils u.U. unter Verbleib eines mittigen Drehbutzens, abgedreht. Die Ausgestaltung gemäß Fig. 7 gewährleistet eine besonders großflächige Begrenzungsanlage zwischen der Stirnfläche des freien Wellenendes und der Anlauffläche der Stellschraube auch bei stärkerer Durchbiegung des freien Wellenendes unter Last. Zweckmäßigerweise ist die Stellschraube 2 mit dem Ansatz 21 und der jeweiligen Anlauffläche als einstückiges, mit nur in einer Richtung ziehbaren Formteilen herstellbares Kunststoff-Spritzgußteil ausgeführt.

Es dürfte ersichtlich sein, daß die derart ausgebildete erfindungsgemäße Stellschraube auf einfache Weise eine Begrenzung des Axialspiels und der Durchbiegung der Motor-Getriebe-Welle auch bei einem großen Toleranzbereich aufgrund einer sich aus mehreren Toleranzkettengliedern zusammensetzenden Toleranzspiels vorteilhaft anwenden läßt. Durch von außen zu bewerkstelligendes Eindrehen der Stellschraube 2 läßt sich die jeweils gewünschte Axialspiel-Begrenzung auch bei großer Toleranzbandbreite erreichen; gleichzeitig wird auch die Stützlagerfunktion dem unterschiedlichen Axialspiel angepaßt, was z.B. bei Anordnung des Stützlagers als gesondertes Bauteil in einer Tasche des Getriebegehäuses nicht möglich wäre.

Eine besonders vorteilhafte Anwendung der erfindungsgemäßen Stellschraube ergibt sich somit bei einem Getriebemotor mit einem gegen eine, insbesondere flanschartige Anlagefläche 41 eines Getriebegehäuses 4 mit seiner einen Stirnseite befestigbaren gesonderten Motorgehäuse eines
Elektromotors, wenn zur Befestigung zwischen Motorgehäuse 2 einerseits und Getriebegehäuse 4 andererseits in
der Nähe der einen Stirnseite 31 des Motorgehäuses zumindest zwei am Umfang verteilt eingestanzte schlitzförmige Öffnungen 33, 34 vorgesehen sind, in die Blechlaschen 5, 6 jeweils mit ihrem einen Ende 51, 61 einsteckbar und mit ihrem anderen, im wesentlichen radial
aus den schlitzförmigen Öffnungen 33, 34 herausragenden
Enden 52, 62 im Sinne einer axialen Festspannung des
Motorgehäuses gegen die Anlagefläche 41 des Getriebegehäuses 4 in dieses, z.B. mittels Schrauben 7, 8 einschraubbar sind. Durch die Halterung zwischen Motorgehäuse 3 und Getriebegehäuse 4 mittels einer Festspannvorrichtung, wobei zweckmäßigerweise zwischen den gegeneinander zu spannenden Anlageflächen noch eine Dichtung 19
zwischengelegt ist, kann nicht verhindert werden, daß je
nach Grad der Festspannung und den Fertigungstoleranzen
der zur Anlage kommenden Flächen ein größeres Axialspiel
der einerseits im Motorgehäuse 3 und andererseits im Getriebegehäuse 4 gelagerten Motor-Getriebe-Welle hingenommen werden muß. Darüber hinaus wird das Axialspiel
durch die toleranzbehaftete Festlegung zwischen dem
linken Ende des Motorgehäuses 3 und dem Lagerschild 36
beeinflußt,gegen dessen innere Stirnfläche die Motor-
Getriebe-Welle 9 anläuft.

Ein weiteres Glied in der bei der Begrenzung des Axialspiels zu berücksichtigten Toleranzkette ergibt sich
dadurch, daß das Motorgehäuse 3 aus einem gerollten Stan-
Biegeteil gebildet ist, derart daß das Motorgehäuse 3 aus
einer zunächst ebenen Platine, in die sämtliche Formgebungen des Gehäuses, insbesondere auch die schlitzförmigen Öffnungen 33, 34 für die einzusteckenden Blechlaschen
5, 6 an- bzw. ausgestanzt sind und das danach zu einem aus Fig. 4 im Querschnitt ersichtlichen geschlossenen
Gehäuse gerollt und mittels Schwalbenschwanz-Verbindungen an den voreinanderliegenden Kanten in seiner endgültigen Lage fixiert wird.

Zur Zentrierung bei dem Montagevorgang zwischen Elektromotor und Getriebegehäuse ist in vorteilhafter Weise eine
der Stirnflächen 31 des Motorgehäuses 3 angepaßte umlaufende Führungsnut 42 in der Anlagefläche 41 des Getriebegehäuses 4 vorgesehen, in die bei der Montage des
Elektromotors das Motorgehäuse 3 mit seiner Stirnseite
31 zunächst einsteckbar und damit zentrierbar ist. Anschließend werden die mit ihren inneren Enden in entsprechend angepaßte schlitzförmige Öffnungen 33, 34 eingesteckten Blechlaschen 5, 6 mittels in Öffnungen an
ihren anderen radial herausragenden Enden axial eingesteckter und anliegender Schrauben 7, 8 gegen die Anlageflächen 41 des Getriebegehäuses 4 festgespannt. Beim
Einschrauben der Schrauben 7, 8 in die Anlagefläche 41
des Getriebegehäuses 4 wird der Elektromotor 3 gegen die
Anlagefläche 41 festgezogen. Dabei sind die schlitzförmigen Öffnungen 33, 34 in einem derartigen Abstand zur
Stirnseite 31 des Motorgehäuses 3 angeordnet, daß immer
ein genügender axialer freier Abstand zwischen der Stirnseite 31 und der Anlagefläche 41 im Getriebegehäuse 4
verbleibt und somit beim Anziehen der Schrauben 7, 8
eine Vorspannung gewährleistet ist, die das Motorgehäuse
3 an das Getriebegehäuse 4 drückt. Zur Abdichtung zwischen Motorgehäuse 3 und der Anlagefläche 41 des Getriebegehäuses 4 kann in vorteilhafter Weise zuvor ein Dichtungsring 19 in die Führungsnut 42 eingelegt werden.

Anschließend wird dann durch einfaches Eindrehen der
Stellschraube 2 die gewünschte Begrenzung des Axialspiels
in Abhängigkeit von dem im Einzelfall gegebenen Toleranzmaß eingestellt und gleichzeitig der als Stützlager dienende hohlzylinderförmige Ansatz 21 bis zu einer möglichst großen axialen Tiefe über den Absatz 931 des Wellenendes 93 gebracht.

Zur Montagevereinfachung ist der Außendurchmesser der Getriebe-Schnecke 12 kleiner als der Außendurchmesser des übrigen Teils der Motor-Getriebe-Welle 9, so daß sämtliche direkt auf der Motor-Getriebe-Welle zu montierenden Rotor-Bauteile über die Verzahnung der Getriebe-Schnecke 12 vom rechten Ende her aufschiebbar sind. Die Motor-Getriebe-Welle 9 ist an ihrer Außenfläche im Bereich des Rotor-Blechpaketes 11 und des Kommutators 18 mit einer Längsriffelung versehen, derart daß beim Aufdrücken des Kommutators 18 auf die Motor-Getriebe-Welle 9 sich diese Längsriffelung in das Kommutatormaterial eingräbt und einen sicheren formschlüssigen Sitz des Kommutators 18 auf der Motor-Getriebe-Welle 9 gewährleistet. Eine Entlastungskerbe 91 zwischen dem linken Kalottenlager 15 und der Getriebe-Schnecke 12 ist für den Fall einer Dauerbruchgefahr vorgesehen. Zur Befestigung der gesamten Kfz-Fensterheber-Antriebseinheit, z.B. in einer Kfz-Tür können am Getriebegehäuse 4 angegossene Befestigungsaugen 43, 44, 45 dienen. Selbstverständlich ist die beschriebene Antriebseinheit auch für äquivalente Anwendungsfälle z.B. zum motorischen Schließen und Öffnen eines Kfz-Schiebedaches vorteilhaft anwendbar.

7 Figuren

12 Patentansprüche

Patentansprüche

1. Getriebemotor, insbesondere elektromotorischer Fensterheber-Antrieb, mit einem in das Innere des Getriebegehäuses (4) ragenden freien Wellenende (93) einer Motor-Getriebe-Welle (9),auf dem eine mit einem Getriebe-Schneckenrad (13) betriebsmäßig in Eingriff stehende Getriebe-Schnecke (12) befestigt ist und dessen Durchbiegung bei Last durch ein im Getriebegehäuse (4) gehaltenes Stützlager sowie dessen Axialspiel durch eine im Getriebegehäuse (4) angeordnete Axialspielbegrenzungsvorrichtung begrenzbar ist, d a d u r c h g e - k e n n z e i c h n e t , daß eine das Axialspiel begrenzende, vor der Stirnseite des freien Wellenendes (93) in das Getriebegehäuse (4) einschraubbare Stellschraube (2) zusätzlich an ihrem inneren Ende mit einem, das freie Wellenende (Absatz 931) übergreifenden Ansatz (21) versehen ist, durch den die Durchbiegung des freien Wellenendes (93) begrenzbar ist.

2. Getriebemotor nach Anspruch 1, d a d u r c h g e k e n n z e i c h n e t , daß die Stellschraube (2) an ihrem inneren Ende mit einem hohlzylinderförmigen, das freie Wellenende (Absatz 931) übergreifenden Ansatz (21) versehen ist (Fig. 1).

3. Getriebemotor nach Anspruch 1 oder 2, d a d u r c h g e k e n n z e i c h n e t , daß das freie Wellenende (93) im Bereich des Ansatzes (21) mit einem von dem Ansatz (21) radial und axial übergriffenen Absatz (931) mit einem gegenüber dem Außendurchmesser der Getriebe-Schnecke (12) bzw. dem übrigen Wellenende (93) verringerten Außendurchmesser versehen ist (Fig. 1).

4. Getriebemotor nach einem der Ansprüche 1 bis 3,
d a d u r c h   g e k e n n z e i c h n e t ,   daß
die Anlauffläche der Stellschraube (2) für die gegenüberliegende Stirnfläche (932) des freien Wellenendes
(93) mit einer Wölbung (22) im Sinne einer mittigen
Berührung zur Stirnfläche (932) versehen ist.(Fig. 5).

5. Getriebemotor nach einem der Ansprüche 1 bis 3,
d a d u r c h   g e k e n n z e i c h n e t ,   daß
die Anlauffläche der Stellschraube (2) für die gegenüberliegende Stirnfläche (933 bzw. 935) des freien
Wellenendes (93) mit einem konzentrischen Anlaufring
mit einer Wölbung (23 bzw. 24) im Sinne einer außermittigen Berührung zur Stirnfläche (933 bzw. 935) versehen ist (Fig. 6, 7).

6. Getriebemotor nach Anspruch 4 oder 5,   d a d u r c h
g e k e n n z e i c h n e t ,   daß die Wölbung konvexförmig ausgebildet ist (Fig. 5, 6).

7. Getriebemotor nach Anspruch 4 oder 5,   d a d u r c h
g e k e n n z e i c h n e t ,   daß die Wölbung konkavförmig und die Stirnfläche (935) entsprechend konvexförmig ausgebildet ist (Fig. 7).

8. Getriebemotor nach Anspruch 6,   d a d u r c h
g e k e n n z e i c h n e t ,   daß die Stirnfläche des
freien Wellenendes (Absatz 931) ohne Mittenzentrierloch
planflächig abgedreht ist (Fig. 5, 6).

9. Getriebemotor nach Anspruch 5,   d a d u r c h   g e -
k e n n z e i c h n e t ,   daß die Stirnfläche (933
bzw. 935) mit einem mittigen, von dem Anlaufring (23
bzw. 24) berührungsfrei übergriffenen Drehbutzen (934
bzw. 936) versehen ist (Fig. 6, 7).

0082375

10. Getriebemotor nach einem der Ansprüche 1 bis 9, d a d u r c h   g e k e n n z e i c h n e t ,   daß die mit einem in Form eines Stützlagers mit einem Ansatz und einer Anlauffläche für die Stirnfläche des freien Wellenendes versehene Stellschraube (2) aus einem einstückigen, insbesondere einem einstückigen Kunststoff-Spritzgußteil besteht.

11. Getriebemotor nach einem der Ansprüche 1 bis 10, d a d u r c h   g e k e n n z e i c h n e t ,   daß bei einem gegen eine, insbesondere flanschartige, Anlagefläche (41) eines Getriebegehäuses (4) mit seiner einen Stirnseite befestigbaren gesonderten Motorgehäuse (3) eines Elektromotors das Motorgehäuse (3) in der Nähe seiner einen Stirnseite (31) zumindest zwei am Umfang verteilte eingestanzte schlitzförmige Öffnungen (33, 34) aufweist, in die Blechlaschen (5, 6) jeweils mit ihrem einen Ende (51, 61) einsteckbar und mit ihrem anderen, im wesentlichen radial aus den schlitzförmigen Öffnungen (33, 34) herausragenden Ende (52, 62) im Sinne einer axialen Festspannung des Motorgehäuses (3) gegen die Anlagefläche (41) des Getriebegehäuses (4) in dieses einschraubbar (Schrauben 7, 8) sind.

12. Getriebemotor nach einem der Ansprüche 1 bis 10, d a d u r c h   g e k e n n z e i c h n e t ,   daß das Motorgehäuse (3) aus einem gerollten Stanz-Biegeteil besteht (Fig. 3, 4).

FIG 2

FIG 1

FIG 3

FIG 4

FIG 5

FIG 6

FIG 7